(19) Europäisches Patentamt
European Patent Office
Office européen des brevets

(11) **EP 4 187 442 A1**

(12) **EUROPEAN PATENT APPLICATION**

(43) Date of publication:
**31.05.2023 Bulletin 2023/22**

(21) Application number: **21306638.4**

(22) Date of filing: **25.11.2021**

(51) International Patent Classification (IPC):
**G06N 3/04** *(2023.01)*          **G06N 20/20** *(2019.01)*
**G06N 3/08** *(2023.01)*

(52) Cooperative Patent Classification (CPC):
**G06N 20/20; G06N 3/0442; G06N 3/047;**
**G06N 3/082; G06N 3/084;** G06N 3/048

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **SORBONNE UNIVERSITE**
**75006 Paris (FR)**
• **Centre national de la recherche scientifique**
**75016 Paris (FR)**

• **Datakalab**
**92110 Clichy (FR)**

(72) Inventors:
• **BAILLY, Kevin**
**75005 PARIS (FR)**
• **TALLEC, Gauthier**
**75005 PARIS (FR)**
• **DAPOGNY, Arnaud**
**92210 CLICHY (FR)**

(74) Representative: **Cabinet Nony**
**11 rue Saint-Georges**
**75009 Paris (FR)**

(54) **COMPUTER-IMPLEMENTED METHOD FOR TRAINING A MULTI-TASK NETWORK**

(57)     The invention relates to a computer-implemented method for training a multi-task network comprising at least one recurrent network having:
- task-specific cells, respectively blocks of tasks,
- a differentiable order selector for determining a convex combination of a number M of different possible task orders, respectively blocks orders, for processing an input, by allocating a selector order coefficient $\pi_i$ to each task order, respectively block order, and,
- a merging module for computing the weighted average of the outputs given by the recurrent network for the M orders using as weights the order selector coefficients $(\pi_1, \pi_2, ..., \pi_M)$,
the method comprising training jointly the task-specific cells and the order selector to minimize a loss function.

[Fig 1c]

Fig. 1c

**Description**

**Field of the invention**

The present invention relates to multi-task networks.

**Background of the invention**

Deep multi-task learning methods is a subset of deep learning methods that aim at exploiting similarities between several tasks in order to improve individual task performance.

Deep multi-task learning methods have recently shown excellent results in diverse applicative fields among which are face analysis, image segmentation, speech synthesis, and natural language processing [3].

The most widely adopted method generally relies on implicit modelling of task dependencies using weight sharing. It consists in splitting the model into parts that are shared across tasks and parts that are task specific.

Seminal work [7] adopted this weight sharing strategy by making use of a common encoder along with task specific regressors. The intuition behind this is that forcing the same learned features to predict several related tasks should encourage more general representations and consequently improve generalization performances.

However, one weakness of this method comes with deciding how far features should be shared as it intuitively depends on task relatedness (the more related the tasks the further the sharing) which can be hard to determine. To tackle this issue, several approaches such as [8] used adaptive architectures to jointly learn which layers should be shared between tasks, as well as the task prediction itself. This philosophy has also been used in modular approaches which consist in learning a set of trainable modules along with how they should be combined for each task: [7] used soft layer ordering to learn the best block combination for each task in a fully differentiable way.

Weight sharing may help finding features that are useful for all tasks and therefore implicitly models input-related task conditional dependencies, though, it doesn't capture inter-task relationships that do not depend on input (e.g., the prior that detection of a beard implies high probability that the subject also has a mustache). In order to model those dependencies, several approaches such as [1] leveraged recurrent neural networks to decompose the task joint distribution into a product of conditional distributions using Bayes chain rule. [12] argued that the order in which the chain rule is unrolled impacts the final joint estimate modelization performance. In the light of this observation, they proposed a two-steps method: The first step consists in an exploration phase in which several orders are explored. At the end of this phase, a single order is fixed once and for all based on the exploration phase performance and predictions are computed using this order.

The most widely adopted deep multi-task approach is to model task dependencies using weight sharing only [3], i.e., to assume labels conditional independence given the input image. Template networks for this approach are composed of a shared encoder $f_{\boldsymbol{w}}$ parametrized by matrix $\boldsymbol{W}$ along with a specific prediction head $g_{\boldsymbol{w}}^{(t)}$ parametrized by $\boldsymbol{W}^{(t)}$ for each task $t \in [1, T]$.

In the following, scalars are denoted using regular characters, vectors are in bold. For vector $\mathbf{v}$ the $t$ - $th$ coordinate is denoted by $v^{(t)}$, and the vector of its t - 1 first coordinates is denoted by $v^{(<t)}$.

Let $D = \{(x_i, y_i)\}_i^N$ be a training dataset composed of input vectors $\mathbf{x}$ and binary labels $\mathbf{y}$ of size $T$, such that $\forall\, t \in [1, T]$, $y^{(t)} \in \{0,1\}$ where $T$ is the number of tasks.

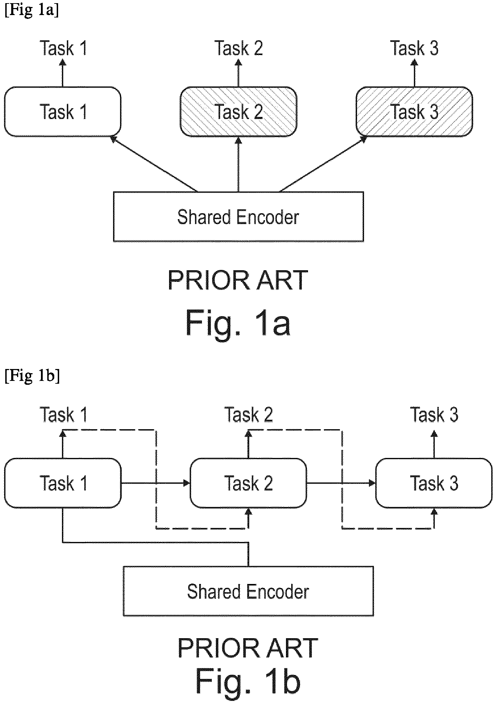

One refers to instances of such template as Vanilla Multi-task Networks (VMN), as shown in Figure 1a. From an architectural point of view, such method uses a common encoder to induce input-related dependencies and predicts the different tasks using separate regressors in parallel.

Giving input x, the prediction for task $t$ is the output of the $t$ - $th$ prediction head:

$$p^{(t)} = S\left(g_{W^{(t)}} \circ f_W(x)\right)$$

where S denotes the sigmoid function. Task t distribution is then estimated as follows:

$$\log p_\theta\left(y^{(t)} \mid x\right) = -\mathrm{BCE}\left(y^{(t)}, p^{(t)}\right)$$
$$= y^{(t)} \log p^{(t)} + \left(1 - y^{(t)}\right) \log\left(1 - p^{(t)}\right)$$

where $\theta = \{W, (W^{(t)})_t\}$ and training is done by minimizing the following maximum likelihood-based loss:

$$\mathcal{L}(\theta) = -\sum_{i=1}^{N}\sum_{t=1}^{T} \log p_\theta\left(y_i^{(t)} \mid x_i\right)$$

If VMN are the most classic multi-task learning approach, their modelization assumption do not account for inter-task relationships that are independent of the input image. Those relationships include numerous human knowledge-based priors such as the statistical dependency between the presence of a beard and the presence of a mustache, for instance. Naturally, however, predictive performance of a deep network may benefit from exploiting these priors.

Different from VMN, Multi-task Recurrent Neural Networks (MRNN) model inter-task dependencies through both weight sharing and joint conditional distribution modelization, as shown in Figure 1b.

For that purpose, the joint conditional distribution of labels is decomposed using Bayes chain rule:

$$p(y \mid x) = \prod_{t=1}^{T} p\left(y^{(t)} \mid y^{(<t)}, x\right)$$

The MRNN approach is to encode input vectors with network $f_w$ and to feed the output representation as the initial state $h^{(0)}$ of a recurrent computation process driven by cell $g_v$ with parameters **V**. At step $t$, this process takes one hot encoded ground truth for timestep $t - 1$ task along with hidden state $h^{(t-1)}$ and outputs prediction $p^{(t)}$ for timestep $t$ and next timestep hidden state $h^{(t)}$. In a nutshell:

$$h^{(0)} = f_W(x), y^{(0)} = 0$$

$$o^{(t)}, h^{(t)} = g_V\left(h^{(t-1)}, \tilde{y}^{(t-1)}e_{t-1}\right)$$

where $\tilde{y}^{t-1} = 2(y^{(t-1)} - 1)$ and $(e_1,...,e_T)$ denotes canonical vectors of $R^T$. Prediction $p^{(t)}$ is then given by:

$$p^{(t)} = S\left(o^{(t)}\right)$$

Task t conditional distribution w.r.t previous tasks is estimated as:

$$\log p_\theta\left(y^{(t)} \mid y^{(<t)}, x\right) = -\text{BCE}\left(y^{(t)}, p^{(t)}\right)$$

where $\theta = \{V, W\}$ and training is done by minimizing the following loss:

$$\mathcal{L}(\theta) = -\sum_{i=1}^{N}\sum_{t=1}^{T} \log p_\theta\left(y_i^{(t)} \mid y_i^{(<t)}, x_i\right)$$

The performances of MRNN are directly linked to the conditional joint distribution estimate modelization performance that itself depends on the modelization performance of each element in the chain rule product. In [12], it is established that order matters, meaning that unrolling chain rule in a different task chaining order leads to different modelization performance. This comes from the fact that tasks may be easier to learn in a given order. By relying on a single arbitrary chain rule decomposition order, MRNN misses the opportunity to better exploit the inter-task relationships.

**Summary**

There remains a need for improving performances of multi-task networks, and exemplary embodiments of the present invention relate to a computer-implemented method for training a multi-task network comprising at least one recurrent network having:

- task-specific cells, respectively blocks of tasks,
- a differentiable order selector for determining a convex combination of a number **M** of different possible task orders, respectively blocks orders, for processing an input, by allocating a selector order coefficient $\pi_i$ to each task order, respectively block order, and,

a merging module for computing the weighted average of the outputs given by the recurrent network for the **M** orders using as weights the order selector coefficients ($\pi_1$, $\pi_2$,...,$\pi_M$).

Thanks to the invention, the network can smoothly select the best order and significantly outperforms existing multi-task approaches, as well as state-of-the-art methods for real-world multi-task problems. The network achieves superior performances by jointly optimizing task ordering and predictions.

By optimizing the task order, the method according to the invention takes advantage of situations where order matters. A further advantage of the invention is that, by learning more than one task order all along, the training improves the network's generalization capacity, leading to competitive performance, even in situation where orders do not significantly matter.

Tasks

By "task specific cell", it is meant that each cell is trained to predict the same task across all orders.

The tasks may be of various types and the method according to the invention is not limited to a particular type of task, or a particular category of tasks.

In some embodiments, the tasks may be selected among face attribution classification, for example attributes related to the prediction of gender, such as mustache, beard, heavy makeup and sex, or attributes related to the detection of accessories, for instance earrings, eyeglasses, necklace.... The attributes may be features representing face attractiveness, such as arched eyebrows or high cheekbones, or may be related to haircut.

In other embodiments, the tasks may be related to facial action unit detection or any other multi-task binary classification

The tasks may also be selected among other families, such as categorical classification, regression or even unsupervised problem.

Differentiable order selector

By "differentiable order selector", it is meant that the network may learn the best order in a differentiable way. The method according to the invention extends MRNN by parallelly estimating the joint conditional distribution using different orders and smoothly selecting the best estimate.

The order selector may comprise a softmax layer over logits u.

The order selector may determine the combination of the different possible orders in different ways.

Preferentially, the order selector determines the convex combination of different possible orders based on a soft order modelling inside Birkhoff's polytope.

Such a modelling is described below. Let's define a soft order of $T$ tasks as any real doubly stochastic matrix $\Omega$ of size $T \times T$, i.e., a matrix such that:

$$\forall i, j \in [1, T]: \sum_{k=1}^{T} \Omega_{i,k} = \sum_{k=1}^{T} \Omega_{k,j} = 1$$

Intuitively, in such case, the coefficient $\Omega_{i,j}$ associated to each row i and column j in $\Omega$ corresponds to the probability to address task j at step i. Therefore, in the extreme situation where all columns are one-hot vectors, a soft order matrix becomes a "hard" order (i.e., a permutation matrix) that models a deterministic task order. More precisely, if $\sigma$ denotes a permutation, its associated order matrix is:

$$(M_\sigma)_{i,j} = \begin{cases} 1 \ if \ j = \sigma(i) \\ 0 \ \ otherwise \end{cases}$$

The Birkhoff-Von Neumann's theorem states that the class of doubly stochastic matrices (also called Birkhoff's polytope) is the convex hull of all the order matrices.

In other words, any soft order matrix $\Omega$ can be decomposed as a convex combination of $M$ order matrices. Formally, there exists $M$ a finite number, $(\pi_1, \pi_2, ..., \pi_M) \in R$, and $M_{\sigma_1}, ..., M_{\sigma_M}$, $M$ order matrices such that:

$$\Omega = \sum_{m=1}^{M} \pi_m M_{\sigma_m}$$

Therefore, each soft order of T tasks can be parametrized by the coefficients $(\pi_1, \pi_2, ... , \pi_M)$ associated to each possible order matrices, with $M = T!$. The reciprocal is also true: given $M$ order matrices, with $M \leq T!$, each convex combination $(\pi_1, \pi_2, ..., \pi_M)$ also defines a soft order.

Joint training

The method according to the invention is a multi-task learning method with joint task order optimization, which means that the task order and the prediction are modeled in an end-to-end manner.

The exemplary soft order modelling described above can be used to provide a differentiable parametrization of soft orders, that will allow to jointly learn both the task order and prediction by smoothly navigating within Birkhoff's polytope. To do so, M ≤ T! random permutations are first generated, denoted as $(\sigma_m)_{m \in [1,M]}$. For each permutation σ, a joint distribution convex $p^\sigma$ is generated by unrolling the Chain Rule in order σ:

$$p^\sigma(y \mid x) = \prod_{t=1}^{T} p^\sigma\big(y^{\sigma(t)} \mid y^{\sigma(<t)}, x\big)$$

Finally, a final joint distribution is computed as a convex combination of each permutation-based joint distribution:

$$p(y \mid x) = \sum_{m=1}^{M} \pi_m p^{\sigma_m}\big(y^{\sigma_m(t)} \mid y^{\sigma_m(<t)}, x\big)$$

where $(\pi_1, \pi_2, ..., \pi_M)$ are the order selector coefficients that position the learned soft order $\Omega = \sum_{m=1} \pi_m M_{\sigma_m}$ inside Birkhoff's polytope.

By learning the order selector coefficients $(\pi_1, \pi_2, ..., \pi_M)$, the search of soft order $\Omega$ is constrained inside a convex subset of Birkhoff polytope which is the convex hull of matrix orders $M_{\sigma_1}, ..., M_{\sigma_M}$, which is a preferential way to learn the best order in a differentiable way.

The formulation described above may be used in other ways. For example, by keeping the coefficients frozen during the training phase, one could learn all orders and output the prediction as the unweighted mean of all order predictions.

The training may comprise joint training of a shared encoder with the training of the order selector and task-specific cells of the recurrent network.

Architecture of the multi-task network

The task-specific cells are preferentially recurrent cells, which allows to capture the order information. Such recurrent cells may be of different types, in particular GRU type, or LSTM type.

The multi-task network may be composed of $T$ task-specific recurrent cells $(g_{w(t)})_{1 \leq t \leq T}$. Each cell is trained to predict the same task across all orders.

For an order $\sigma$, task $\sigma(t)$ is predicted using recurrent cell $g_w\sigma(t)$ and is conditioned on the results of all preceding tasks in the order $\sigma$(i.e., tasks $\sigma$ (1); ....; $\sigma(t$ -1)).

The rationale behind this comes from traditional RNN usage, where each cell predicts a single task in different contexts. (e.g., RNN-based sentence translation is a repetition of word translations conditioned by the context of neighboring words). Here, each task-associated predictor learns to predict the corresponding task in different contexts corresponding to the different orders.

Concretely, for order $\sigma_m$, the computational graph unfolds as follows:

$$h_m^{(0)} = f_W(x), y_m^{(0)} = 0,$$

$$o_m^{(t)}, h_m^{(t)} = g_{W^{\sigma_m(t)}}\left(h_m^{(t-1)}, \tilde{y}_m^{(t-1)} e_{\sigma_m(t-1)}\right)$$

where

$$\tilde{y}_m^{(t-1)} = 2\left(y^{\sigma_m(t-1)} - 1\right)$$

The prediction $p_m^{(t)}$ at timestep t is computed as:

$$p_m^{(t)} = S\left(o_m^{(t)}\right)$$

and is used as follows:

$$\log p_\theta^{\sigma_m}\left(y^{\sigma_m(t)} \mid y^{\sigma_m(<t)}, x\right) = -\text{BCE}\left(y^{\sigma_m(t)}, p_m^{(t)}\right)$$

Hence, parameters $\theta = (W,(W^{(t)})_{1 \le t \le T})$ as well as the order selector, defined as a softmax layer over logits **u**, are jointly learned through minimizing a loss function. Preferentially, the training is performed to minimize the maximum likelihood-based loss function defined as:

$$\mathcal{L}(\theta, \pi) = -\sum_{i=1}^{N} \log \sum_{m=1}^{M} \exp\left[\log \pi_m + \log p_\theta^{\sigma_m}\left(y_i \mid x_i\right)\right]$$

The above-described architecture is preferential when logits u does not depend on the input vector x, that is, if there exist an order, or several orders, that perform best for all input vectors x.

Other architectures are possible, in particular to account for the case where the best order(s) depends on the input. For instance, logits u may be predicted from input x using a fully dense network with rectified linear unit (ReLU) activations.

The method according to the invention is not limited to a task order selection mechanism, and the corresponding architecture that has just been described.

In other embodiments, for instance, the task space may be partitioned in several blocks of conditionally independent tasks and the differentiable order selector may determine a soft order of blocks during training. Such a partitioning into blocks greatly improves the scalability of the method by allowing the network to handle a large number of tasks.

Order dropout strategy

The smooth selection performed by the order selector according to the invention contrasts with [12]'s once and for all choice of order by keeping on learning several orders during the training phase.

In some embodiments, an order dropout mechanism may be added on top of the soft order modelling. Such a mechanism encourages modules to display good predictive performances for several orders of prediction and consequently bolsters modules generalization capacity.

A further advantage is that it may prevent order overfitting as well as save computational runtime.

Hence, preferentially, the order selector performs an order dropout during at least part of the training.

The above-described order selection mechanism during training is based on the evolution of the order selector coming from the minimization of the loss function using gradient descent techniques. Intuitively, this tends to assign higher order selection coefficient to the orders that already have the lowest losses.

This observation comes with issues at different stages of the training:

- Warm up

When the training begins, the order losses mostly depend on network initialization, rather than on their respective performance.

Hence, order selection in the first epochs may likely lead to quasi-random solutions. This may be all the more problematic as weight allocation is prone to snowballing, i.e., to keep allocating more and more weight to a previously selected order.

To circumvent this issue, the method may comprise freezing the order selector during a warm-up phase so that all M task orders are given an identical weight.

Therefore, during the warm-up phase, the order logits u may be frozen for the first n epochs to give the network an exploration opportunity.

- Post warm-up:

The order with the lowest training loss best fits the empirical distribution. Thus, ranking orders based on their training loss may yield increased risk of overfitting.

To address this issue, the drop-out strategy may comprise training each example on a random subset of *k* permutations by zeroing-out (M - *k*) order selector coefficients, the order coefficient being defined as:

$$\tilde{\pi}_m^i = \frac{t_m^i \exp(u_m)}{\sum_{l=1}^M t_m^l \exp(u_l)}$$

where $t_m^i$ is a randomly sampled binary mask with *k* ones and (*M-k*) zeros.

For inference, each *exp(u_m)* is then multiplied by its probability *p(k, M)* of presence, as in [28]:

$$\pi_m = \frac{p(k, M) \exp(u_m)}{\sum_{l=1}^M p(k, M) \exp(u_l)} = \frac{\exp(u_m)}{\sum_{l=1}^M \exp(u_l)}$$

The order dropout may thus prevent order overfitting by encouraging the network to keep accurate predictions for different orders.

Inference

Once trained, the multi-task network may generate a prediction from an input x. The prediction for an input x is the expectancy of order-based networks prediction over all orders.

Several variants are possible, corresponding to several ways of estimating this expectancy.

In particular, an aspect of the present invention relates to a computer-implemented method for performing multiple prediction tasks and generating a global network prediction using a multi-task network trained according to the method described above, the method comprising:

- sampling R orders from the order selector, and L trajectories for each recurrent cell,
- generating a global network prediction by averaging the predictions of the L*R samples.

Sampling from the order selector allows to dynamically combine *T* recurrent cells, one for each task, in an order that has been learned during training.

Inference may thus be done by predicting all tasks in L orders sampled from the order selector and by averaging those L predictions.

The sampling may be obtained through different methods. Preferentially, the sampling is done using Monte Carlo sampling estimation.

For example, the Monte Carlo sampling estimation samples N orders and computes the average of the prediction of the N corresponding order-based networks. The main benefit of this approach is that it restricts the number of parallel predictions to compute from M to N.

The expectancy can be estimated using other methods.

For instance, one may obtain the exact estimation by computing the full weighted average of the prediction of all order networks.

As a variant, the prediction could be obtained using a filtering-based estimation which would consist in restricting the weighted average of order-based network prediction to the orders with high order selector values.

The method according to the invention may be used for different applications. For instance, the method may be used for performing at least one of human face and body analysis scene analysis, speech recognition, image classification.

The method may use images as inputs. The prediction tasks may be of various nature, depending on the application.

For instance, for human face analysis, the method may be used to predict landmarks, pose, action units, attributes, emotions, identities...

For human body analysis, the predictions may comprise body pose, attributes, actions...

For scene analysis, the method may be used to generate segmentation maps, 3D depth maps, object bounding box...

For speech recognition, the method may be used to predict the identity or emotions, or for source separation.

For image classification, the prediction tasks may consist in classifying the images into classes and subclasses, such as differentiating dogs and poodles...

Computer System

The method according to the invention may be implemented using any computer system.

The computer system may be a laptop, a personal computer, a workstation, a computer terminal, one or several network computers, or any other data processing system or user device, such as a microcontroller for example.

Preferentially, the computer system comprises at least one processing unit which controls the overall operation related to the method of the invention by executing computer program instructions. The processing unit may comprise general or special purpose microprocessors or both, or any other kind of central processing unit.

The computer system may comprise one or more storage media on which computer program instructions and/or data are stored. The storage media may comprise magnetic, magneto-optical disks, or optical disks, such as an internal hard drive, any type of removable storage medium or a combination of both.

The computer system preferably comprises at least one memory unit that can be used to load the instructions or/and data when they are to be executed by the processing unit.

The memory unit comprises for instance a random-access memory (RAM) and/or a read only memory (ROM).

The computer system may further comprise one or more user interfaces, such as any type of display, a keyboard, a pointing device such as a mouse or trackpad, audio input devices such as speakers or microphones, or any other type of device that allows user interaction with the computer system.

The computer system may comprise one or more network interfaces for communicating with other devices.

Another aspect of the invention relates to a computer program product comprising code instructions that cause a computer system to perform the method as defined above when the program is run on the computer system.

**Drawings**

Several exemplary embodiments will now be described with reference to the accompanying drawings, in which:

Figures 1a is a diagrammatic block view of the Vanilla Multi-task Network (VMN) of the prior art (already described),
Figure 1b is a diagrammatic block view of the Multi-task Network RNN (MRNN) of the prior art (already described),
Figure 1c is a diagrammatic block view of a multi-order network according to the invention,
Figure 2 is a computational graph of an example of multi-order network according to the invention,
Figure 3 is a diagrammatic block view showing another embodiment of a multi-order network according to the invention,
Figure 4 shows the distribution of examples sampled from a toy dataset,
Figure 5 illustrates performances comparison with and without dropout,
Figure 6 are examples of two soft-order matrices extracted at the end of two different trainings.

**Detailed description**

In the following description, use will be made of the notations already disclosed in reference to Figures 1a and 1b.

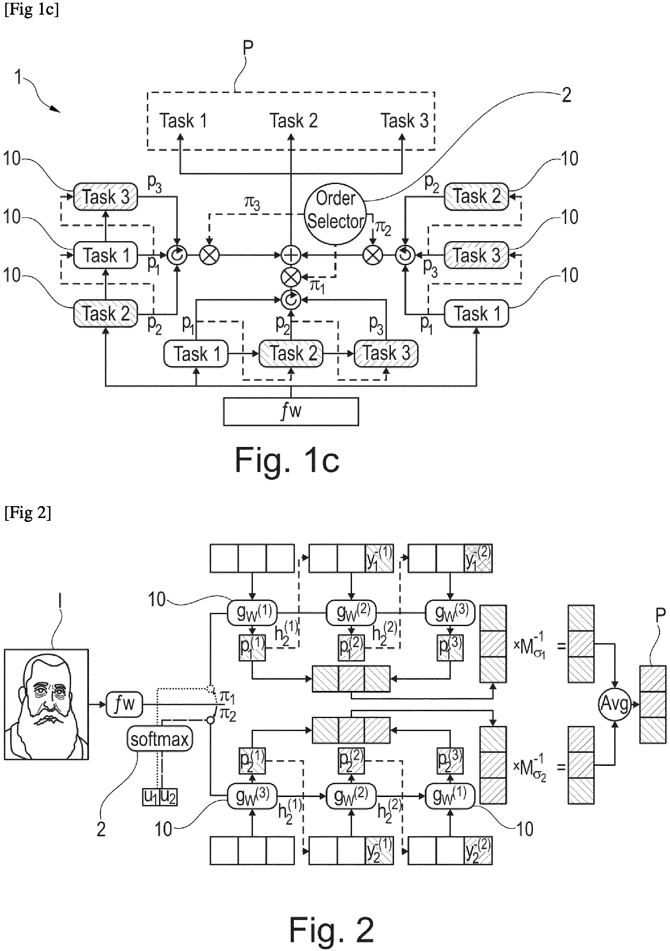

Figure 1c illustrates an example of a multi-order, also referred hereafter as "multi-order" and/or "multi-task" network architecture 1 according to the invention for a 3-task problem.

More generally, as described earlier, a multi-order network in accordance with the invention may be composed of $T$ recurrent cells 10.

Each recurrent cell is "task-specific", that is, it is trained to predict the same task across all orders. Here, each task-associated predictor learns to predict the corresponding task in different contexts corresponding to the different orders.

In the disclosed example, there are T=3 tasks (task 1, task 2, task 3) and M=3 exemplary orders $\sigma$ are shown ($\sigma_1$ = [1, 2, 3], $\sigma_2$ = [1, 3, 2] and $\sigma_3$ = [2, 1, 3]), though more orders are of course possible.

The multi-order network 1 comprises a shared encoder $f_w$ and an order selector 2, and the training of the network occurs with joint task order optimization.

The training relies on a differentiable order selection based on soft order modelling inside Birkhoff's polytope. Recurrent modules, one for each task, are learned with their optimal chaining order in a joint manner.

In the disclosed example, the soft order selection consists in determining the order selector coefficients $\pi_1$, $\pi_2$ and $\pi_3$, corresponding to the first, second and third order considered, respectively.

At the inference level, to output a final prediction P comprising the three tasks, the predictions $p_1$, $p_2$ and $p_3$ of the recurrent task-specific cells are weighted by a convex combination using the order selector coefficients $\pi_1$, $\pi_2$ and $\pi_3$ determined during training.

Before weighting, the predictions may be normalized in a common order (represented by the round arrows on figure 1c).

On figure 2, an overview of an exemplary inference scheme is represented for a multi-order network with $T$ = 3 tasks and $M$ = 2 orders, the orders being $\sigma_1$ = [1, 2, 3] and $\sigma_2$ = [3,2,1].

The raw input is an image I, which is fed to an encoder $f_w$. The tasks may be related to detection and/or prediction of some attributes of the person represented on the image. For instance, the network may detect the mustache or beard of the person and predict the gender.

At inference time, the network predicts all tasks in L different orders sampled from the order selector 2.

The final prediction P is then the average of those L predictions $p_i$. This soft order modelling allows to jointly learn both the order selection and task prediction at train time. Thus, it can efficiently capture inter-task dependencies, leading to enhanced multi-task performance.

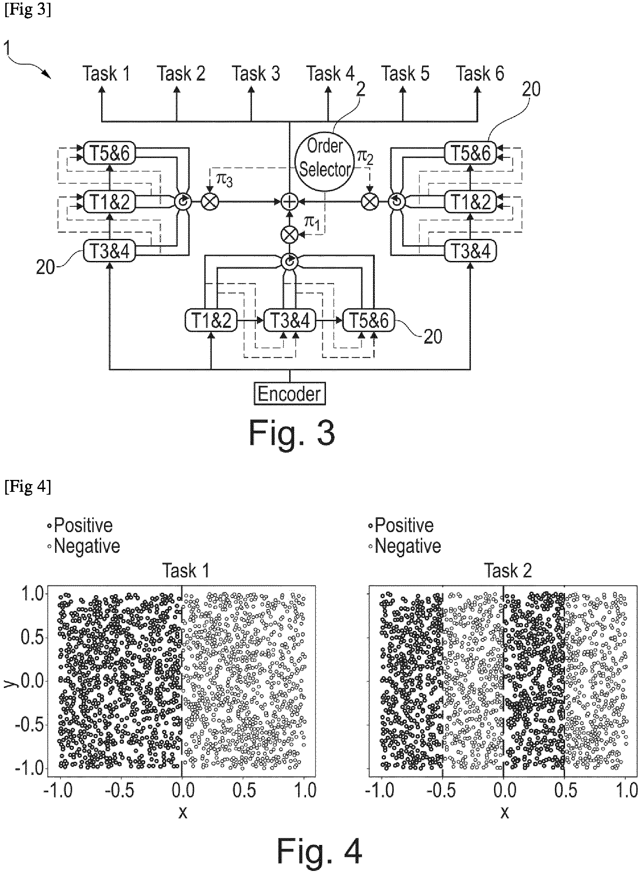

In another embodiment represented on figure 3, the task space is not partitioned in different tasks, but in different blocks 20 of conditionally independent tasks. In the disclosed example, there are in total six different tasks and each block 20 comprises 2 tasks. The training of the network occurs with joint block order optimization, that is, the order selector 2 determines a soft order, or convex combination of different block orders (three orders in the disclosed example). More precisely, it navigates between orders by learning a convex combination of permutation matrices, similarly as for the task orders.

For each block order, an order selector coefficient $\pi_i$ is determined, and the predictions from each block are weighted using these coefficients to generate a final prediction for each task.

**Examples**

Several examples are now described in reference to figures 4 to 6.

The first example, hereafter referred as "Toy experiment" is an empirical validation of the method according to the invention with a 2-dimensional multi-task binary classification toy dataset.

The second example, hereafter referred as "real-scenarios" compares the performance of the method according to the invention with existing multi-task baselines in several real-world scenarios such as Attribute detection and Facial Action Unit (FAU) detection.

**Datasets**

Toy dataset

A 2-dimensional multi-task binary classification toy dataset represented in Figure 3 is designed.

For $T$ tasks, it uses the following laws for input and labels:

$$X \sim \mathcal{U}([-1;1]^2),$$

$$\forall t \in [1,T]: Y_T^{(t)} = 1_{\bigcup_{i=1}^{2^t} \left[b_{2i}^{(t)}, b_{2i+1}^{(t)}\right]}\left(X^{(1)}\right)$$

Where

$$b_i^{(t)} = -1 + \frac{i-1}{2^t}$$

The interval $[-1;1]^2$ is vertically split in a recurrent way. This dataset has a natural order in which the tasks are easier to solve.

More precisely, task 1 vertically splits $[-1, 1]^2$ in two zones of equal size. Examples in the left zone are positive for task 1, while the right zone hold negative examples.

Task 2 applies the same vertical splitting strategy to each of the so-formed two zones. More generally, Task t vertically splits each of the $2^{t-1}$ zones of task t - 1.

All tasks are deterministic and consequently mutually independent conditionally to **X**.

The best order is the order in which each task is easier to learn based on the previous one's results. The burning point of this claim is that the result of a task can simplify another task without any apparent statistical dependencies between those two. If the toy example is taken for T = 2, $Y_2^{(1)}$ can be expressed as a function of X:

$$Y_2^{(2)} = 1_{[-1;-1/2]\cup[0;1/2]}\left(X^{(1)}\right)$$

or as a function of X and $Y_2^{(1)}$:

$$Y_2^{(2)} = Y_2^{(1)} 1_{[-1;-1/2]}\left(X^{(1)}\right) + \left(1 - Y_2^{(1)}\right) 1_{[0;1/2]}\left(X^{(1)}\right)$$

Therefore, task 1 result simplifies the learning of task 2's dependency in X from the indicator of a reunion of two segments to the indicator of a single segment. Similarly, the knowledge of the t - 1 first tasks simplify the learning of task t dependency in **X** from the indicator function of a reunion of $2^{t-1}$ segment to the indicator function of a single segment.

Hence, for $t \in [1, T]$, conditioning task t+1 by the t first tasks results transforms it into an easy-to solve classification problem with a single linear boundary. Conversely, conditioning task t+1 by the result of upcoming tasks in coordinate order do not simplify its complexity as a classification problem, it remains a $2^t - 1$ linear boundary problem.

500, 250 and 250 examples are generated for the train, val and test partitions, respectively. Those sizes are deliberately small to challenge networks modelization performance.

In particular, figure 4 shows the distribution of 2000 examples sampled from the toy dataset with *T*= 2. Given task 1, i.e., given the left-right positioning of the sample w.r.t to the black dashed boundary, task 2 is simplified into a single linear boundary learning problem represented by red boundaries. For example, provided that a sample lies on the left side of the black boundary, task 2 is simplified into deciding whether it lies left or right of the left red boundary.

Real world scenarios

Two particular datasets are used for the real-world scenarios.

*CelebA* is a widely used database in multi-task learning, composed of ≈200k celebrity images annotated with 40 different facial attributes. For performance evaluation, accuracy score is measured using the classic train (≈160k images), valid (≈20k images) and test (≈ 20k images) partitions for 5 different subsets: *gender, accessories, haircut, beauty, miscellanous.*

Each subset comprises several different attributes as described below:

- *CelebA gender:* in this subset, the attributes detected are:

moustache, beard, lipstick, heavy makeup and sex.

Those attributes display prior statistical dependencies. For example, a beard often comes with a mustache and heavy makeup is likely to include lipstick.

- *CelebA accessory:* the presence of accessories is detected, namely: earrings, eyeglasses, necklaces and neckties.

- *CelebA beauty:* in this subset, the focus is on face attractiveness features (with CelebA annotators standards), namely: arched eyebrows, attractiveness, high cheekbones, rosy cheeks, and oval faces.

- *CelebA haircut:* This subset is focused on detecting hair colors. Its attributes are: bald, black hair, blond hair, brown hair, and gray hair.

The specificity of this subset is that the attributes are mutually exclusive.

- *CelebA miscellaneous*: in this subset, the attributes are: o'clock shadow, pointy nose, mouth slighlty open, oval face, and weither the subject is young or not.

The incentive behind the choice of this subsets is that the attributes are independant a priori.

*DISFA* is a dataset for facial action unit detection which is a multi-task problem. It contains 27 videos for 100k face images. Those images are collected from 27 participants and annotated with 12 unitary muscular activations called Action Units (AU). Originally, each AU label is an intensity score from 0 to 5. In detection, labels with an intensity score higher than 2 are considered positive [13]. For performance evaluation, one may follow related work strategy that is to report F1-Score on 8 AUs using a subject exclusive 3-fold cross-validation with publicly available fold partition from [10] and [11].

**Implementation details**

In the experiments, the multi-order network in accordance with the invention is compared with several multi-task baselines, each using a shared encoder and a number of prediction heads.

For VMN-Common (VMNC), the prediction head consists in two dense $\rightarrow$ BN $\rightarrow$ ReLU applications followed by another dense $\rightarrow$ sigmoid layer with $T$ outputs. VMN-Separate (VMNS) use T prediction heads, each with the same structure, except the last layer is of size 1. Finally, MRNN uses a single Gated Recurrent Unit (GRU) cell which sequentially predicts the T tasks. Task order is randomly sampled for each MRNN experiment.

Toy Experiment

The shared encoder consists of four dense layers with 64 units and ReLU activation. Prediction heads for both VMNC and VMNS consist in dense layers with 64 units.

Both MRNN and the multi-order network of the invention employ GRU cells with 64 units and L = 20 orders.

All networks are trained by applying 500 epochs with Adam as described in [4], batch size 64 with an exponentially decaying base learning rate 5$e$ - 4 and $\beta$ = 0:99.

The order selector of the invention is trained with Adam with 15 epochs for warm up and constant learning rate 0:005.

Real-world applications

The shared encoder consists in an Inception-Resnet-v1 backbone with bottleneck size 512 pretrained on VGGFace2 database for face recognition [2]. Prediction heads for both VMNC and VMNS consist in dense layers with 64 units and $L$ = 20 trajectories.

Networks are trained with 30 epochs using AdamW [6] with default weight decay and learning rate 0:0005 with exponential decay ($\beta$ = 0:96).

For the hyperparameters of the multi-order network according to the invention, $M$ = 5! = 120 permutations are used with drop-out $k$ = 32 for attribute detection and $M$ = 512; $k$ = 128 for facial action units. In both cases, 5 epochs for warmup are used.

**Results**

Toy Experiment

Table 1 below draws a comparison between different versions of the multi-order network according to the invention, corresponding to different settings for hyperparameters $M$ (number of orders) and $k$ (number of kept orders with the proposed order dropout strategy), and with $T = 4, 5, 6, 7$ tasks.

First of all, for $T = 4, 5$, there is a large gap in performance between the Multi-order network according to the invention with random order $k/M = 1/1$ and learned order ($k/M = 24/24$ and $k/M = 120/120$, for $T = 4$ and 5 tasks, respectively).

This is likely due to the fact that, in the latter case, for both $T = 4$ and $T = 5$ tasks, the multi-order network according to the invention is able to successfully retrieve the correct order (corresponding to $I_T$). In such a case, the network can correctly model the sequence of inter-task dependencies and learn adequate representation and prediction functions, hence superior performances.

Therefore, for nearly every run, the multi-order network of the invention manages to find the correct order IT and significantly outperforms the random order, approaching the oracle predictor with correct order.

[Table 1]

| T | k/ M | order | Finds $I_T$? | Task 1 | Task 2 | Task 3 | Task 4 | Task 5 | Task 6 | Task 7 | Mean |
|---|---|---|---|---|---|---|---|---|---|---|---|
| 4 | 1/1 | random | 0/5 | 99.9 | 97.4 | 92.3 | 82.1 | - | - | - | 92.9 |
|  | 24/24 | learned | 5/5 | 100.0 | 99.3 | 96.3 | 92.1 | - | - | - | 96.9 |
|  | 16/24 | learned | 5/5 | 100.0 | 99.2 | 97.5 | 94.7 | - | - | - | 97.8 |
| Oracle | 1/1 | $I_T$ | 5/5 | 100.0 | 99.5 | 97.4 | 94.0 | - | - | - | 97.7 |
| 5 | 1/1 | random | 0/5 | 99.9 | 96.6 | 88.4 | 72.9 | 63.4 | - | - | 84.2 |
|  | 120/120 | learned | 5/5 | 100.0 | 99.3 | 97.1 | 94.1 | 88.8 | - | - | 95.8 |
|  | 80/120 | learned | 5/5 | 100.0 | 99.4 | 96.7 | 93.5 | 88.3 | - | - | 95.5 |
| Oracle | 1/1 | $I_T$ | 5/5 | 100.0 | 99.5 | 97.7 | 94.2 | 90.1 | - | - | 96.3 |
| 6 | 1/1 | random | 0/5 | 99.9 | 97.5 | 91.2 | 70.6 | 58.2 | 56.4 | - | 78.9 |
|  | 480/720 | learned | 5/5 | 100.0 | 99.2 | 97.4 | 94.1 | 90.0 | 79.1 | - | 93.3 |
| Oracle | 1/1 | $I_T$ | 5/5 | 100.0 | 99.1 | 97.6 | 93.9 | 90.6 | 82.4 | - | 93.9 |
| 7 | 1/1 | random | 0/5 | 99.9 | 97.2 | 87.6 | 73.1 | 63.4 | 55.1 | 57.3 | 76.2 |
|  | 480/5040 | learned | 4/5 | 100.0 | 99.2 | 96.5 | 91.9 | 65.9 | 55.9 | 56.8 | 80.9 |
| Oracle | 1/1 | $I_T$ | 5/5 | 100.0 | 99.1 | 97.3 | 94.4 | 90.3 | 84.4 | 67.9 | 90.5 |

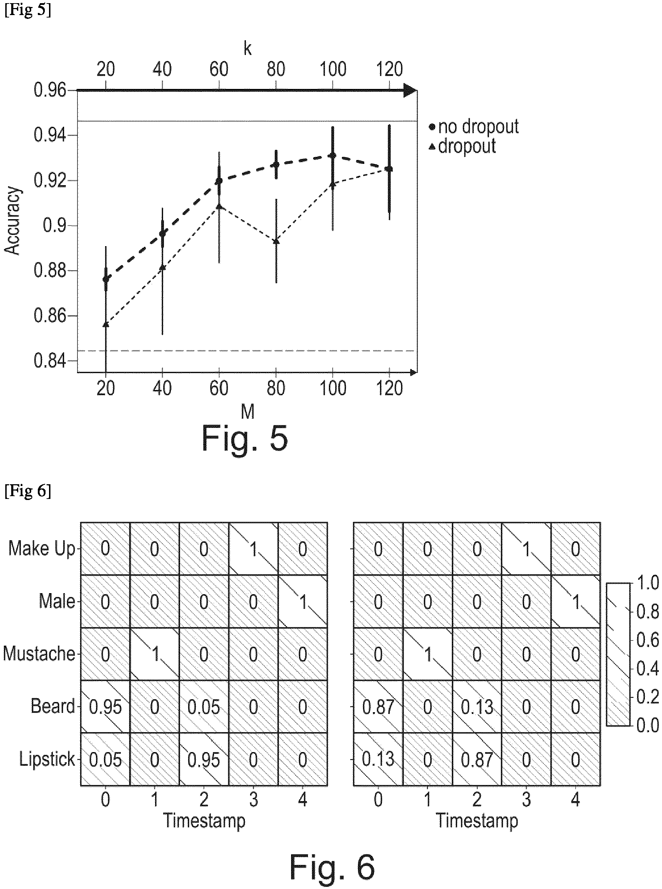

Furthermore, Figure 5 shows the comparison of the performance of the multi-order network of the invention for $T = 5$ tasks with different settings for k and M, when training for 200 epochs. First, the method without order dropout (red plot) shows that the accuracy is practically an increasing function of the number of order $M$: this validates our assumption that in a multi-task setting with strong inter-task dependencies, the importance of the order in which those tasks are predicted is paramount. Furthermore, the method of the invention with $M = 120$ and order dropout (green plot) allows to reach higher accuracy and get closer to the oracle with enforced correct order $I_T$.

As such, it can be seen in Table 1 that the multi-order network of the invention with order dropout (16/24 and 80/120 for $T = 4$ and 5 tasks respectively) matches the oracle performance for $T = 4, 5, 6$ and significantly outperforms the random order baseline with larger number of tasks, e.g., $T = 7$. As such, even for fairly high numbers of tasks ($T = 6,7$), the multi-order network of the invention using order dropout still manages to retrieve the correct order.

Even when it doesn't manage to do so (1/5 when $T = 7$) the order it finds still outperforms the random order selection baseline. The drop of performances between the oracle and the learned order version can be explained by the exploration time that the multi-order network of the invention takes to find the correct order: intuitively, the smaller the $k/M$ ratio is, the more the exploration takes over the exploitation at train time. Further investigations are presented in the supplementary section.

Finally, Table 2 shows relative performances of the multi-order network of the invention w.r.t multi-task baselines: the multi-order network of the invention displays significantly better performances than VMNC and VMNS as well as MRNN, rivaling the oracle performance. Eventually, it is demonstrated in a controlled benchmark where an optimal task chaining order is known that (a) the multi-order network of the invention is able to consistently retrieve said order, and (b) that thanks to its joint order selection mechanism and task-specific recurrent cell sharing architecture, backed by the proposed order dropout strategy, the multi-order network of the invention is able to consistently outperform other multi-task baselines, getting closer to an oracle predictor using the optimal order.

[Table 2]

| Accuracy | Task 1 | Task 2 | Task 3 | Task 4 | Task 5 | Mean |
|---|---|---|---|---|---|---|
| VMNC | 99.9 | 97.7 | 77.5 | 52.7 | 51.4 | 75.8 |
| VMNS | 99.6 | 97.5 | 72.8 | 51.5 | 52.9 | 74.9 |
| MRNN | 96.0 | 95.0 | 75.9 | 65.0 | 59.6 | 78.3 |
| MONET | 100.0 | 99.4 | 96.7 | 93.5 | 88.3 | 95.5 |
| Oracle[†] | 100.0 | 99.5 | 97.7 | 94.2 | 90.1 | 96.3 |

Applications to real-world scenarios

Real-world applications with potentially more complex inter-task dependencies are now considered.

• Attribute detection

Table 3 below is a comparison of the multi-order network of the invention with multi-task baselines on several attributes' subsets of CelebA.

On the one hand, there is no clear winner between the two VMN versions: for instance, VMNS performs better on the gender and accessories subsets while VMNC performs better on haircut and misc.

Those performance discrepancies may result in practical difficulties to find an all-around, well performing architecture, as echoed in [8].

Furthermore, MRNNs gets consistently outperformed by at least one of the VMN methods. In fact, MRNN recurrent cell sharing across tasks is believed to lead to early conflicts between task-associated gradients and prevents it from taking full advantage of its theoretically better inter-task relationship modelling.

The multi-order network of the invention, on the other hand, shows consistently better performances than both VMN as well as MRNN on every subset, due to its order selection mechanism that, in turn, allows to correctly model inter-task dependencies.

[Table 3]

| Gender | H. Makeup | Mate | Mustache | No Beard | W Lipstick | Avg. |
|---|---|---|---|---|---|---|
| VMNC | 88.0 | 95.8 | 96.6 | 95.4 | 90.2 | 93.2 |
| VMNS | 90.2 | 97.0 | 96.7 | 95.5 | 93.9 | 94.6 |
| MRNN | 89.9 | 96.9 | 96.7 | 95.6 | 93.6 | 94.5 |
| MONET | 90.5 | 97.5 | 96.8 | 95.8 | 93.9 | 94.9 |

| Accessories | Eyeglasses | W Earrings | W Hat | W Necklace | W Necktie | Avg. |
|---|---|---|---|---|---|---|
| VMNC | 99.4 | 88.5 | 98.4 | 86.8 | 95.8 | 93.8 |
| VMNS | 99.5 | 89.5 | 98.6 | 87.1 | 96.7 | 94.3 |
| MRNN | 99.5 | 89.6 | 98.7 | 87.1 | 96.6 | 94.3 |
| MONET | 99.2 | 89.9 | 98.5 | 87.3 | 96.8 | 94.3 |

| Haircut | Bald | Black Hair | Blond Hair | Brown Hair | Gray Hair | Avg. |
|---|---|---|---|---|---|---|
| VMNC | 98.6 | 88.3 | 95.3 | 88.0 | 98.0 | 93.6 |
| VMNS | 98.6 | 86.2 | 95.2 | 86.9 | 97.9 | 93.0 |
| MRNN | 98.6 | 86.7 | 95.2 | 86.2 | 97.8 | 92.9 |
| MONET | 98.7 | 88.3 | 95.4 | 88.0 | 98.0 | 93.7 |

(continued)

| Beauty | A Eyebrows | Attractive | H ChBones | R Cheeks | Oval Face | Avg. |
|---|---|---|---|---|---|---|
| VMNC | 82.8 | 81.1 | 86.8 | 94.2 | 73.7 | 83.7 |
| VMNS | 82.5 | 81.0 | 86.5 | 94.4 | 74.0 | 83.7 |
| MRNN | 82.8 | 80.6 | 86.3 | 94.6 | 74.1 | 83.7 |
| MONET | 82.8 | 81.5 | 86.9 | 94.7 | 74.4 | 84.1 |

| Misc. | 5 Shadow | P Nose | M S Open | Oval Face | Young | Avg. |
|---|---|---|---|---|---|---|
| VMNC | 93.6 | 76.6 | 93.5 | 74.2 | 86.4 | 84.9 |
| VMNS | 93.6 | 76.7 | 84.8 | 74.1 | 86.8 | 83.2 |
| MRNN | 93.6 | 76.1 | 93.2 | 73.6 | 85.6 | 84.4 |
| MONET | 94.2 | 76.7 | 93.6 | 74.3 | 87.0 | 85.2 |

Figure 5 shows two soft-order matrices extracted at the end of two different multi-order networks training on CelebA gender subset.

First, it appears that those two matrices are very similar.

Hence, the order selection mechanism of the invention is relatively stable across several networks and order selector initializations.

Second, from a qualitative point of view, it appears that the multi-order network of the invention first focuses on easier, specific tasks: it typically detects the attribute beard (which intuitively are more visible) before mustache, and lipstick (which has a very characteristic color) earlier than heavy makeup (which exhibit more variability).

Then, in the light of the prediction of the aforementioned attributes, multi-order network of the invention concludes on the sex of the subject.

The multi-order network of the invention thus selects a suitable order for predicting the sequence of tasks, enhancing the final prediction accuracy.

- Facial Action Unit detection

Table 4 below shows a comparison between the multi-order network of the invention and other multi-task approaches for facial action unit detection on DISFA database.

There is a large gap in performance between VMNC and VMNS. Furthermore, MRNN performance lies significantly lower than both VMN, likely due to the larger number of tasks, that makes it less likely to find a suitable order.

Nevertheless, due to its order selection mechanism and the proposed order dropout strategy, the multi-order network of the invention reaches significantly higher accuracies.

Table 4 also shows a comparison between the method of the invention and current state-of-the-art deep approaches on DISFA.

Those performances are all the more interesting as methods such as EAC-NET [5], LPNET [9] or JAANET [11] combines appearance features with additional geometric information based on facial landmarks, whereas the method of the invention does not.

Thus, the method of the invention outperforms existing approaches due to its ability to jointly model task order and prediction.

[Table 4]

| F1 Score-AU | 1 | 2 | 4 | 6 | 9 | 12 | 25 | 26 | Avg. |
|---|---|---|---|---|---|---|---|---|---|
| DRML | 17.3 | 17.7 | 37.4 | 29.0 | 10.7 | 37.7 | 38.5 | 20.1 | 26.7 |
| EAC-NET | 41.5 | 26.4 | 66.4 | 50.7 | 8.5 | 89.3 | 88.9 | 15.6 | 48.5 |
| DSIN | 42.4 | 39.0 | 68.4 | 28.6 | 46.8 | 70.8 | 90.4 | 42.2 | 53.6 |
| JAANet | 43.7 | 46.2 | 56.0 | 41.4 | 44.7 | 69.6 | 88.3 | 58.4 | 56.0 |
| LP-Net | 29.9 | 24.7 | 72.7 | 46.8 | 49.6 | 72.9 | 93.8 | 65.0 | 56.9 |
| CMS | 40.2 | 44.3 | 53.2 | 57.1 | 50.3 | 73.5 | 81.1 | 59.7 | 57.4 |
| ARL | 43.9 | 421 | 63.6 | 41.8 | 40.0 | 76.2 | 95.2 | 66.8 | 58.7 |
| JAANET | 62.4 | 60.7 | 67.1 | 41.1 | 45.1 | 73.5 | 90.9 | 67.4 | 63.5 |

(continued)

| F1 Score-AU | 1 | 2 | 4 | 6 | 9 | 12 | 25 | 26 | Avg. |
|---|---|---|---|---|---|---|---|---|---|
| **VMNC** | 56.8 | 59.0 | 64.4 | 51.4 | 43.7 | 75.1 | 92.5 | 62.8 | 63.2 |
| **VMNS** | 53.4 | 51.3 | 64.8 | 45.5 | 36.0 | 70.1 | 89.8 | 62.4 | 59.2 |
| **MRNN** | 47.4 | 49.7 | 61.8 | 46.7 | 38.8 | 71.0 | 91.9 | 60.9 | 58.5 |
| **MONET** | 55.8 | 60.4 | 68.1 | 49.8 | 48.0 | 73.7 | 92.3 | 63.1 | **63.9** |

The above-described examples show that with the method for the invention, it is possible to retrieve the correct order on a toy dataset. Furthermore, the method of the invention significantly outperforms existing multi-task approaches as well as state-of-the-art methods for real-world multi-task problems, for instance attribute detection and facial action unit detection.

**List of References**

[1] Hakan Bilen and Andrea Vedaldi. Integrated perception with recurrent multi-task neural networks. In Advances in neural information processing systems, pages 235-243, 2016.

[2] Qiong Cao, Li Shen, Weidi Xie, Omkar M Parkhi, and Andrew Zisserman. Vggface2: A dataset for recognising faces across pose and age. In 2018 13th IEEE international conference on automatic face & gesture recognition (FG 2018), pages 67-74. IEEE, 2018.

[3] Daxiang Dong, Hua Wu, Wei He, Dianhai Yu, and Haifeng Wang. Multi-task learning for multiple language translation. In Proceedings of the 53rd Annual Meeting of the Association for Computational Linguistics and the 7th International Joint Conference on Natural Language Processing (Volume 1: Long Papers), pages 1723-1732, 2015.

[4] Diederik P. Kingma and Jimmy Ba. Adam: A method for stochastic optimization. In Yoshua Bengio and Yann LeCun, editors, 3rd International Conference on Learning Representations, ICLR 2015, San Diego, CA, USA, May 7-9, 2015, Conference Track Proceedings, 2015. 6

[5] Wei Li, Farnaz Abtahi, Zhigang Zhu, and Lijun Yin. Eacnet: Deep nets with enhancing and cropping for facial action unit detection. IEEE transactions on pattern analysis and machine intelligence, 40(11):2583-2596, 2018. 8

[6] Ilya Loshchilov and Frank Hutter. Decoupled weight decay regularization. In International Conference on Learning Representations, 2019. 6

[7] Elliot Meyerson and Risto Miikkulainen. Beyond shared hierarchies: Deep multitask learning through soft layer ordering. In 6th International Conference on Learning Representations, ICLR 2018, Vancouver, BC, Canada, April 30 - May 3, 2018, Conference Track Proceedings. OpenReview.net, 2018. 2

[8] Ishan Misra, Abhinav Shrivastava, Abhinav Gupta, and Martial Hebert. Cross-stitch networks for multi-task learning. In Proceedings of the IEEE Conference on Computer Vision and Pattern Recognition, pages 3994-4003, 2016. 2, 7

[9] Xuesong Niu, Hu Han, Songfan Yang, Yan Huang, and Shiguang Shan. Local relationship learning with personspecific shape regularization for facial action unit detection. In Proceedings of the IEEE Conference on Computer Vision and Pattern Recognition, pages 11917-11926, 2019. 8

[10] Zhiwen Shao, Zhilei Liu, Jianfei Cai, and Lizhuang Ma. Deep adaptive attention for joint facial action unit detection and face alignment. In Proceedings of the European Conference on Computer Vision (ECCV), pages 705-720, 2018. 5, 8

[11] Zhiwen Shao, Zhilei Liu, Jianfei Cai, and Lizhuang Ma. Jaanet: Joint facial action unit detection and face alignment via adaptive attention. International Journal of Computer Vision, 129(2):321-340, 2021. 5, 8

[12] Oriol Vinyals, Samy Bengio, and Manjunath Kudlur. Order matters: Sequence to sequence for sets. In Yoshua Bengio and Yann LeCun, editors, 4th International Conference on Learning Representations, ICLR 2016, San Juan, Puerto Rico, May 2-4, 2016, Conference Track Proceedings, 2016. 2, 3, 5

[13] Kaili Zhao, Wen-Sheng Chu, and Honggang Zhang. Deep region and multi-label learning for facial action unit detection. In Proceedings of the IEEE Conference on Computer Vision and Pattern Recognition, pages 3391-3399, 2016. 5, 8

**Claims**

**1.** A computer-implemented method for training a multi-task network comprising at least one recurrent network having:

- task-specific cells, respectively blocks of tasks,
- a differentiable order selector for determining a convex combination of a number M of different possible task orders, respectively blocks orders, for processing an input, by allocating a selector order coefficient $\pi_i$ to each task order, respectively block order, and,
- a merging module for computing the weighted average of the outputs given by the recurrent network for the M orders using as weights the order selector coefficients $(\pi_1, \pi_2, ... , \pi_M)$ ,

the method comprising training jointly the task-specific cells and the order selector to minimize a loss function.

2. The method of claim 1, wherein the order selector determines the convex combination of different possible orders based on a soft order modelling inside Birkhoff's polytope.

3. The method of any one of claims 1 and 2, wherein the order selector performs an order dropout during at least part of the training.

4. The method of claim 3, wherein the dropout comprises training each example on a random subset of k permutations by zeroing-out (M-k) order selector coefficients.

5. The method of any one of claims 3 and 4, comprising freezing the order selector during a warm-up phase so that all M task orders are given an identical weight.

6. The method of any one of claims 1 to 5, wherein the training comprises joint training of a shared encoder with the training of the order selector and task-specific cells of the recurrent network.

7. The method of any one of claims 1 to 6, wherein the tasks are selected among one of face attribution classification or facial action detection.

8. The method of any one of claims 1 to 7, wherein the cells are recurrent cells, in particular of GRU type.

9. The method of any one of claims 1 to 8, wherein the training is performed to minimize the maximum likelihood-based loss function defined as

$$\mathcal{L}(\theta, \pi) = - \sum_{i=1}^{N} \log \sum_{m=1}^{M} \exp\left[\log \pi_m + \log p_\theta^{\sigma_m} (y_i \mid x_i)\right]$$

10. The method of any one of claims 1 to 9, wherein the order selector comprises a softmax layer over logits u.

11. A computer-implemented method for performing multiple prediction tasks using a multi-task network trained according to the method of any of the preceding claims, the method comprising:

- sampling R orders from the order selector, and L trajectories for each recurrent cell,
- generating a global network prediction (Y) by averaging the predictions of the L*R samples.

12. The method according to the preceding claim, wherein the sampling is done using Monte-Carlo sampling estimation.

13. The method of any one of claims 11 and 12, for performing at least one of human face and body analysis, scene analysis, speech recognition, image classification.

14. A computer program product comprising code instructions that cause a computer system to perform the method as defined in any one of claims 1 to 13 when the program is run on the computer system.

[Fig 1a]

PRIOR ART

Fig. 1a

[Fig 1b]

PRIOR ART

Fig. 1b

[Fig 1c]

Fig. 1c

[Fig 2]

Fig. 2

[Fig 3]

Fig. 3

[Fig 4]

Fig. 4

[Fig 5]

Fig. 5

[Fig 6]

Fig. 6

Europäisches
Patentamt

European
Patent Office

Office européen
des brevets

# EUROPEAN SEARCH REPORT

Application Number

EP 21 30 6638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ELLIOT MEYERSON ET AL: "Beyond Shared Hierarchies: Deep Multitask Learning through Soft Layer Ordering", ARXIV.ORG, CORNELL UNIVERSITY LIBRARY, 201 OLIN LIBRARY CORNELL UNIVERSITY ITHACA, NY 14853, 31 October 2017 (2017-10-31), XP081319453, * page 1 - page 10 * | 1-14 | INV. G06N3/04 G06N20/20 G06N3/08 |
| X | Crawshaw Michael: "Multi-Task Learning with Deep Neural Networks: A Survey", , 10 September 2020 (2020-09-10), XP055856968, Retrieved from the Internet: URL:https://arxiv.org/pdf/2009.09796.pdf [retrieved on 2021-11-02] * page 13 - page 16 * | 1-14 | |

TECHNICAL FIELDS
SEARCHED      (IPC)

G06N

The present search report has been drawn up for all claims

| Place of search | Date of completion of the search | Examiner |
|---|---|---|
| The Hague | 13 May 2022 | Bohn, Patrice |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAKAN BILEN ; ANDREA VEDALDI.** Integrated perception with recurrent multi-task neural networks. *Advances in neural information processing systems,* 2016, 235-243
- Vggface2: A dataset for recognising faces across pose and age. **QIONG CAO ; LI SHEN ; WEIDI XIE ; OMKAR M PARKHI ; ANDREW ZISSERMAN.** 2018 13th IEEE international conference on automatic face & gesture recognition. IEEE, 2018, 67-74
- **DAXIANG DONG ; HUA WU ; WEI HE ; DIANHAI YU ; HAIFENG WANG.** Multi-task learning for multiple language translation. *Proceedings of the 53rd Annual Meeting of the Association for Computational Linguistics and the 7th International Joint Conference on Natural Language Processing,* 2015, vol. 1, 1723-1732
- A method for stochastic optimization. **DIEDERIK P. KINGMA ; JIMMY BA. ADAM.** 3rd International Conference on Learning Representations, ICLR 2015, San Diego, CA, USA, May 7-9, 2015, Conference Track Proceedings. 07 May 2015
- **WEI LI ; FARNAZ ABTAHI ; ZHIGANG ZHU ; LIJUN YIN.** Eacnet: Deep nets with enhancing and cropping for facial action unit detection. *IEEE transactions on pattern analysis and machine intelligence,* 2018, vol. 40 (11), 2583-2596
- **ILYA LOSHCHILOV ; FRANK HUTTER.** Decoupled weight decay regularization. *International Conference on Learning Representations,* 2019
- **ELLIOT MEYERSON ; RISTO MIIKKULAINEN.** Beyond shared hierarchies: Deep multitask learning through soft layer ordering. *6th International Conference on Learning Representations, ICLR 2018, Vancouver, BC, Canada, April 30 - May 3, 2018, Conference Track Proceedings,* 30 April 2018

- **ISHAN MISRA ; ABHINAV SHRIVASTAVA ; ABHINAV GUPTA ; MARTIAL HEBERT.** Cross-stitch networks for multi-task learning. *Proceedings of the IEEE Conference on Computer Vision and Pattern Recognition,* 2016, 3994-4003
- **XUESONG NIU ; HU HAN ; SONGFAN YANG ; YAN HUANG ; SHIGUANG SHAN.** Local relationship learning with personspecific shape regularization for facial action unit detection. *Proceedings of the IEEE Conference on Computer Vision and Pattern Recognition,* 2019, 11917-11926
- **ZHIWEN SHAO ; ZHILEI LIU ; JIANFEI CAI ; LIZHUANG MA.** Deep adaptive attention for joint facial action unit detection and face alignment. *Proceedings of the European Conference on Computer Vision (ECCV),* 2018, 705-720
- **ZHIWEN SHAO ; ZHILEI LIU ; JIANFEI CAI ; LIZHUANG MA.** Jaanet: Joint facial action unit detection and face alignment via adaptive attention. *International Journal of Computer Vision,* 2021, vol. 129 (2), 321-340
- Order matters: Sequence to sequence for sets. **ORIOL VINYALS ; SAMY BENGIO ; MANJUNATH KUDLUR.** 4th International Conference on Learning Representations, ICLR 2016, San Juan, Puerto Rico, May 2-4, 2016, Conference Track Proceedings
- **KAILI ZHAO ; WEN-SHENG CHU ; HONGGANG ZHANG.** Deep region and multi-label learning for facial action unit detection. *Proceedings of the IEEE Conference on Computer Vision and Pattern Recognition,* 2016, 3391-3399